(19) **Europäisches Patentamt / European Patent Office / Office européen des brevets**

(11) **EP 1 898 312 A1**

(12) **EUROPEAN PATENT APPLICATION**
published in accordance with Art. 153(4) EPC

(43) Date of publication:
**12.03.2008 Bulletin 2008/11**

(21) Application number: **06756529.1**

(22) Date of filing: **24.05.2006**

(51) Int Cl.:
*G06F 12/16* (2006.01)       *G06F 12/00* (2006.01)
*G06F 12/02* (2006.01)

(86) International application number:
**PCT/JP2006/310323**

(87) International publication number:
**WO 2007/000862 (04.01.2007 Gazette 2007/01)**

(84) Designated Contracting States:
**DE FR GB**

(30) Priority: **24.06.2005 JP 2005184364**

(71) Applicant: **MATSUSHITA ELECTRIC INDUSTRIAL CO., LTD.**
**Osaka 571-8501 (JP)**

(72) Inventors:
• **INOUE, Manabu**
**Matsushita Electric Industrial Co. Ltd**
**Shiromi, Chuo-ku, Osaka-shi**
**Osaka 540-6207 (JP)**
• **NAKANISHI, Masahiro**
**Matsushita Electric Industrial Co. Ltd**
**Shiromi, Chuo-ku, Osaka-shi**
**Osaka 540-6207 (JP)**
• **IZUMI, Tomoaki**
**Matsushita Electric Industrial Co. Ltd**
**Shiromi, Chuo-ku, Osaka-shi**
**Osaka 540-6207 (JP)**

• **MORI, Hironori**
**Matsushita Electric Industrial Co. Ltd**
**Shiromi, Chuo-ku, Osaka-shi**
**Osaka 540-6207 (JP)**
• **MAKI, Kunihiro**
**Matsushita Electric Industrial Co. Ltd**
**Shiromi, Chuo-ku, Osaka-shi**
**Osaka 540-6207 (JP)**
• **HONDA, Toshiyuki**
**Matsushita Electric Industrial Co. Ltd**
**Shiromi, Chuo-ku, Osaka-shi**
**Osaka 540-6207 (JP)**

(74) Representative: **Pautex Schneider, Nicole Véronique et al**
**Novagraaf International S.A.**
**25 avenue du Pailly**
**1220 Les Avanchets,**
**Geneva (CH)**

(54) **MEMORY CONTROLLER, NONVOLATILE STORAGE DEVICE, NONVOLATILE STORAGE SYSTEM, AND DATA WRITING METHOD**

(57)    Used is a nonvolatile memory such as a multi-level NAND flash memory having memory cells for holding data of a plurality of pages. When the data is to be written in the nonvolatile memory 110, a physical unit is consisted in units of a plurality of paired pages. When all the physical units cannot be written, the data is copied from an old physical block holding an already written effective data, and is written in a new physical block till the written, from the first section of a new physical unit, so that an error can be prevented.

FIG. 7

EP 1 898 312 A1

**Description**

TECHNICAL FIELD

The present invention relates to a nonvolatile storage device including a rewritable nonvolatile memory, and a memory controller, a nonvolatile storage system, and a data writing method for controlling this device.

BACKGROUND ART

A nonvolatile storage device including a rewritable nonvolatile main memory is widely demanded mainly in a semiconductor memory card. The memory card includes a flash memory as a nonvolatile memory and includes a memory controller for controlling it. The memory controller controls reading and writing data to the flash memory in accordance with directions of reading and writing from an access device such as a digital still camera and personal computer (PC) body.

In a nonvolatile storage device employing a nonvolatile memory, a device that rewrites data in a way of additionally writing is known (Patent document 1). In this nonvolatile storage device, when write data from a host are smaller than units of an erase block, the writing was executed suitably for a minimum writing unit (a sector or page) of the nonvolatile memory, not for an erase block unit. Hereby, a flash storage medium that can improve write performance with eliminating waste copy processing to continuous logical addresses in data writing operation is provided.

And now, a multi-level NAND flash memory is largely expected as a low-cost flash memory and has high possibility of being mainly used as a main storage memory in the memory card hereafter. Patent document 2 discloses an art in which a page structure of the multi-level NAND flash memory has been improved in order to realize highspeed access. In a conventional flash memory that is a two-level memory, one memory cell retains certain bit data of one page. On the other hand, in the multi-level NAND flash memory, each memory cell is configured by a plurality of pages, for example, by striding over two pages, that is, the memory cell retains data of plural bits.

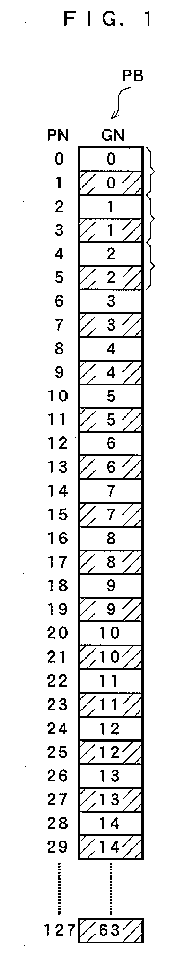

Fig. 1 to Fig. 3 are configuration views showing positions of pages retaining data of the same memory cell group in a physical block when a nonvolatile memory is configured by using memory cells retaining data of plural bits in one memory cell such as the multi-level NAND flash memory. In Fig. 1 to Fig. 3, PN refers to a page number, and writing is executed in the order of the PN number in writing to the physical block. In addition, pages to which the same group number (GN) is given are two pages containing data retained in the same memory cell group. Pages without hatching are referred to as the first pages to be written first in the same memory cell group and pages with hatching are referred to as the second pages to be written later.

In the multi-level NAND flash memory shown in Fig. 1, for example, one memory cell group composes a pair of an even number page and an odd number page. In the Figure, pages in the same group number shown by GN are a pair of pages containing data retained in one memory cell group.

In the respective pairs of pages, a page whose address is lower order is referred to as the first page and a page of higher order (a page with the hatching) is referred to as the second page. In Fig. 1, the first page and the second page are adjoined each other, but in Fig. 2 and Fig. 3, the first page and the second page are separated. This shows the way to separate them in order to reduce influence (disturbing) which writing to another page causes to data stored in an already written page.

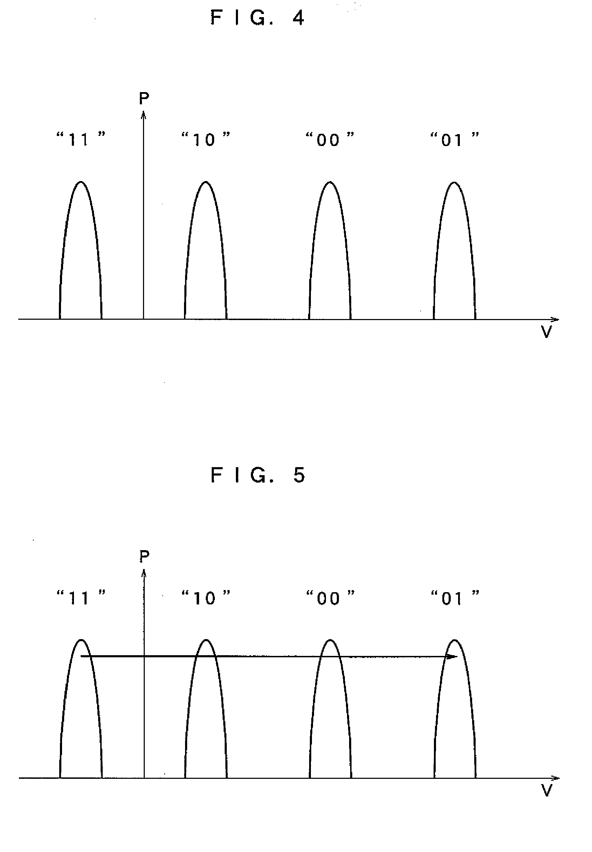

However, when one memory cell is configured striding over 2 pages, there is a problem that, if an error occurs during writing to one page, data stored in the other page change. The problem will be explained by using Fig. 4 to Fig. 6 below.

Fig. 4 is a characteristics diagram showing a distribution of threshold voltages in a memory cell of the multi-level NAND flash memory shown in Fig. 1 to Fig. 3. The memory cell stores data of 2 bits. An abscissa axis shows the threshold voltage V of a memory cell and an ordinate axis shows the number P of memory cells, and four curved lines show threshold voltages of memory cells distribute in four areas.

Codes of "11", "10", "00", and "01" are allocated to four distributions in Fig. 4 starting from the left. A low-order digit (bit) of respective codes corresponds to the first page and a high-order digit (bit) corresponds to the second page. Each memory cell is in an erased state, that is, "11". When the first page side is written in this condition, each of memory cells stays in the state of "11" or changes its state from "11" to "10" when the writing is normally completed. After that, when the second page side is written, each of memory cells, starting from the state of "11", stays in the state of "11" or transfers its state to "01" when the writing is normally completed. Alternatively, the cell, starting from "10", stays "10" or changes its state to "00".

Fig. 5 is a characteristics diagram showing a state where writing to a memory cell is normally completed. In Fig. 5, it is assumed that data of "01" as a target value is written through writing to the first page and second page. A writing process, at first, sets the state to be "11" through writing to the first page, and then, sets the state to be "01" through writing to the second page.

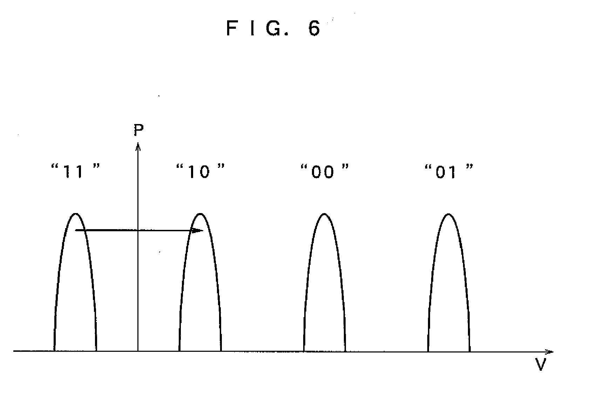

Fig. 6 is a characteristics diagram showing a state where writing to a memory cell fails to be normally completed.

Fig. 6 shows that, in a process where an applied voltage to a memory cell changes from a state of "11" to a state of "01", the applied voltage is trapped in a state of "10" or "00" depending on a fluctuation of supply voltage including sudden power-shutdown and a defect of prosperity caused in the memory cell itself (an arrowed line shows a condition trapped in "10"). In such condition, writing error in a second page spreads to a first page that is already written.

Patent document 1: Japanese Unexamined Patent Publication 2004-62328.
Patent document 2: Japanese Unexamined Patent Publication 2001-93288.

DISCLOSURE OF INVENTION

PROBLEMS TO BE SOLVED BY THE INVENTION

A problem on a system in a case where a multi-level NAND flash memory shown in Fig. 1 is applied to a flash storage medium shown in Unexamined Patent Publication 1, which is a conventional nonvolatile storage system will be described. At first, when a host device writes data of 2 kB in sectors 0 to 3 to a flash storage medium, the flash storage medium executes writing only to PN0 that is the first page, and then the flash storage medium informs the host device of normal completion of the writing. Upon receiving this, the host device recognizes that data of 2 kB in sectors 0 to 3 have been normally written. Subsequently, when the host device newly writes data of 2 kB in sectors 4 to 7 to the flash storage medium, since it is required to write data in the order of the pages, the data are written in the next page, PN 1. The PN0 and PN1 have same group number GN0 as shown in Fig. 1. As a result, when error occurs in writing to the page number PN1, that is, sector number 4 to 7, data in sector number 0 to 3 of the page number PN0 of the same group as the page number PN1 may be destroyed. In this case, it is impossible to restore the data. Since the flash storage medium does not inform the host device of completion of the writing, the host device can accurately recognize that data of 2 kB could not be normally written to the sectors 4 to 7. However, since the host device cannot recognize that data of 2 kB in sectors 0 to 3 which have been recognized as accurately written is destroyed internally in the flash memory, there has been a reliability problem of continuing reading and writing to the flash storage medium under the incorrect recognition.

Consequently, the present invention intends to provide a memory controller, a nonvolatile storage memory, a nonvolatile storage system, and a method for writing data which do not cause the reliability problem if data recorded in predetermined page configuring the same memory cell with the other page have changed due to failure of writing processing to the predetermined page.

MEANS TO SOLVE THE PROBLEMS

To solve the problems, a memory controller of the present invention which executes data writing and data reading to a memory on the basis of a writing and reading command provided from outside, wherein said memory includes a plurality of pages, the page is a unit of writing in the memory, a physical unit is configured with at least one page group consisting of first and second pages in which, when data writing is executed to either page, writing status of data to other page temporarily changes, and comprises: a physical unit writing portion for executing writing to the unwritten physical unit in response to a writing command from the outside.

To solve the problems, a nonvolatile storage device of the present invention comprising: a nonvolatile memory configured with a plurality of pages; and a memory controller which executes data writing and data reading to the nonvolatile memory on a basis of a writing command provided from outside, wherein the page is a unit of writing in the memory, a physical unit is configured with at least one page group consisting of first and second pages in which, when data writing is executed to either page, writing status of data to other page temporarily changes, and the memory controller includes a physical unit writing portion for executing writing to the unwritten physical unit in response to a writing command from the outside.

To solve the problems, a nonvolatile storage system of the present invention comprising an access device and a nonvolatile storage device, wherein the access device transmits at least a writing command and data to the nonvolatile storage device, the nonvolatile storage device includes: a nonvolatile memory configured with a plurality of pages, and a memory controller which executes data writing and data reading to the nonvolatile memory on a basis of a writing and reading command provided from outside, the page is a unit of writing in the memory, a physical unit is configured with at least one page group consisting of first and second pages in which, when data writing is executed to either page, writing status of data to other page temporarily changes, and the memory controller includes a physical unit writing portion for executing writing to the unwritten physical unit in response to a writing command from the outside.

To solve the problems, a data writing method of the present invention which executes data writing and data reading to a memory on a basis of a writing command provided from outside, wherein the memory includes a plurality of pages, the page is a unit of writing in the memory, a physical unit is configured with at least one page group consisting of first and second pages in which, when data writing is executed to either page, writing status of data to other page temporarily changes, and comprises: a physical unit writing step for executing writing to the unwritten physical unit in response to a writing command from the outside.

The memory may store data by using multi-level memory cells.

The memory may be a nonvolatile memory.

The physical unit may be configured with continuous 2n (n = 1, 2, ...) pages.

When first data is written in units equal to or less than the physical unit in writing of one command from the outside, by copying second data from an already written physical units, the physical unit write portion may write data in units of the physical unit by using the first data and the second data.

A page information direction portion may be comprised for retaining information showing which pages in a plurality of the pages are included in the physical unit.

The physical unit may have an area where writing of data to be written from the outside is not executed.

The area where writing is not executed may be a portion of an area in the page group.

The physical unit may be configured with a plurality of discontinuous pages.

When data is written in the memory in accordance with a writing command from outside, the physical unit writing portion may vary a size of the physical unit depending on an amount of data to be written.

EFFECTIVENESS OF THE INVENTION

According to the present invention, if data changes on ground of specific error causing in a memory whose memory cell stores data in plural pages, a reliability problem such that an external host device cannot recognize the condition can be avoided in advance. As a result, the present invention achieves an effectiveness of high reliability equal to or more than that of a nonvolatile storage device using a conventional memory whose memory cell stores data of one page even in a nonvolatile storage device using a flash memory such as a multi-level NAND that enters the mainstream in future.

BRIEF DESCRIPTION OF DRAWINGS

[Fig. 1] Fig. 1 is a configuration view showing a multi-level NAND nonvolatile memory.

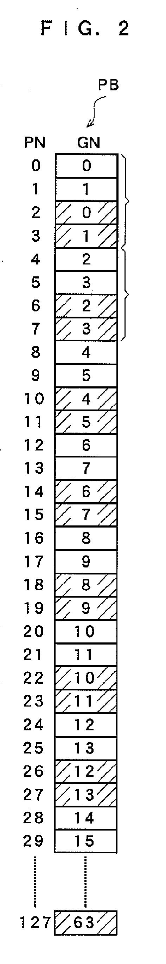

[Fig. 2] Fig. 2 is a configuration view showing a multi-level NAND nonvolatile memory.

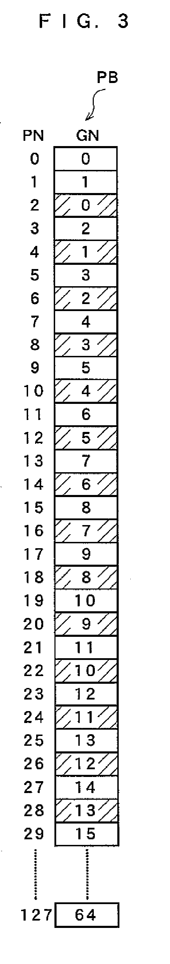

[Fig. 3] Fig. 3 is a configuration view showing a multi-level NAND nonvolatile memory.

[Fig. 4] Fig. 4 is a characteristic chart showing voltage distribution of a memory cell in the multi-level NAND flash memory.

[Fig. 5] Fig. 5 is a characteristic chart showing a condition for the case that writing has been normally completed.

[Fig. 6] Fig. 6 is a characteristic chart showing a condition for the case that writing has not been normally completed.

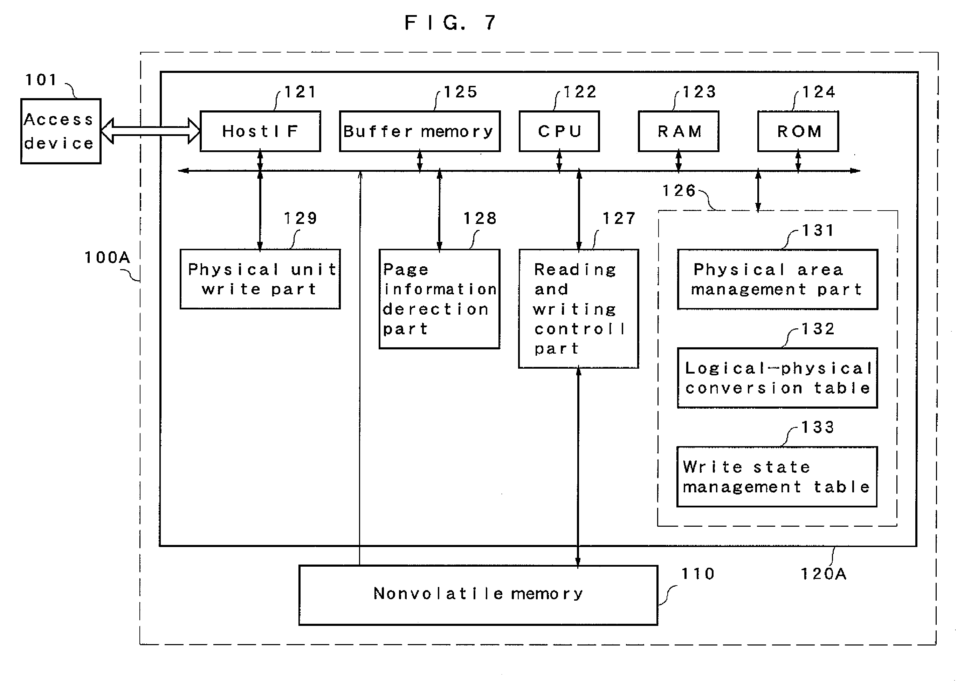

[Fig. 7] Fig. 7 is a block diagram of a nonvolatile storage system according to the first embodiment of the present invention.

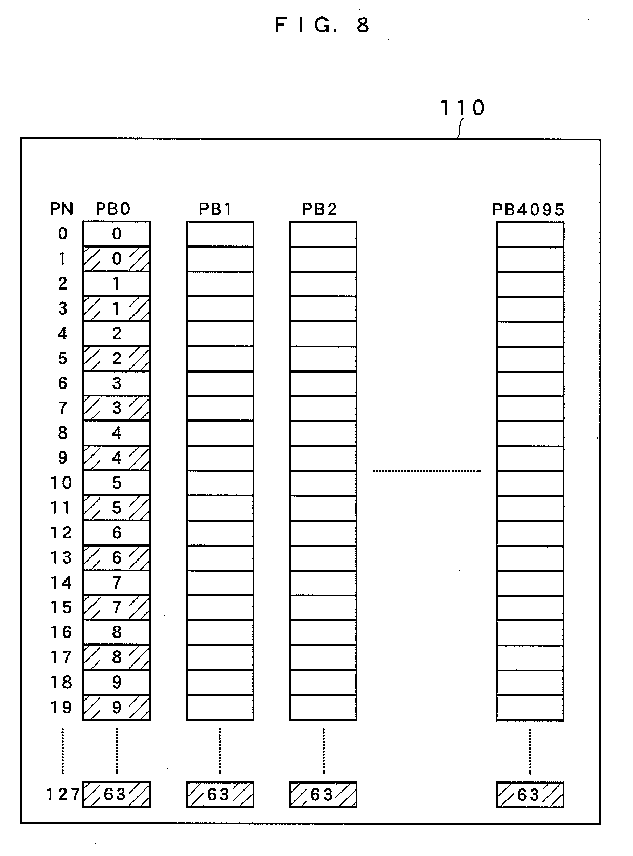

[Fig. 8] Fig. 8 is a view showing a configuration of a nonvolatile memory according to the embodiment.

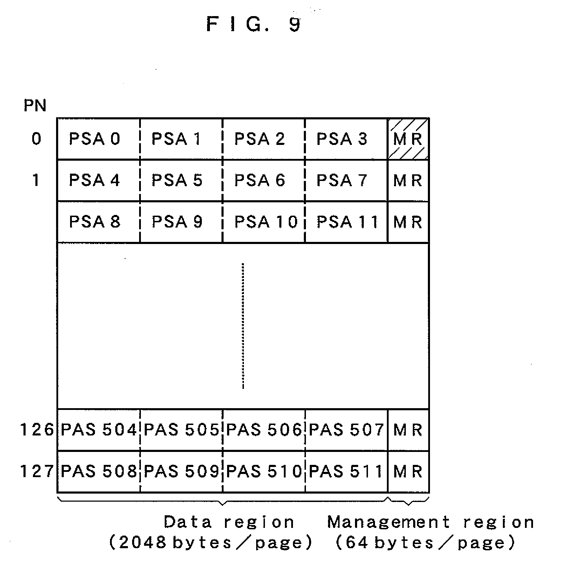

[Fig. 9] Fig. 9 is an explanation view showing a format of a physical block included in a nonvolatile memory 110.

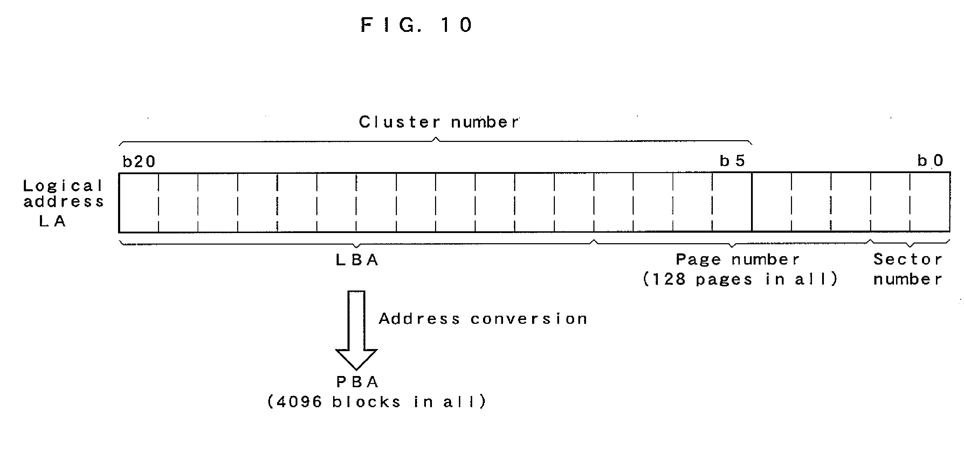

[Fig. 10] Fig. 10 is an explanation view showing a format of a logical address LA.

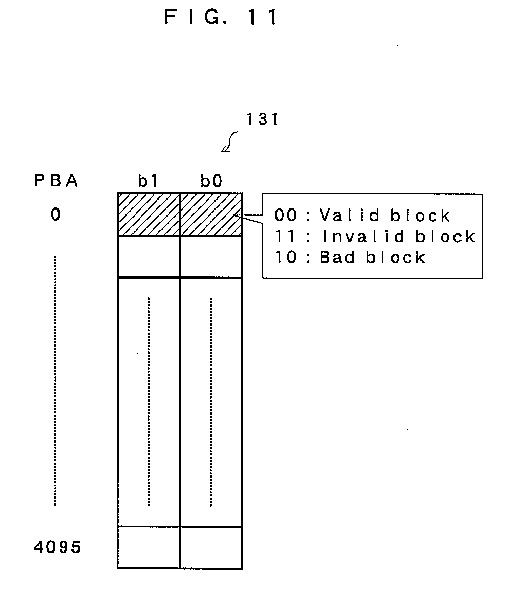

[Fig. 11] Fig. 11 is an explanation view showing a format of a physical area management table 131.

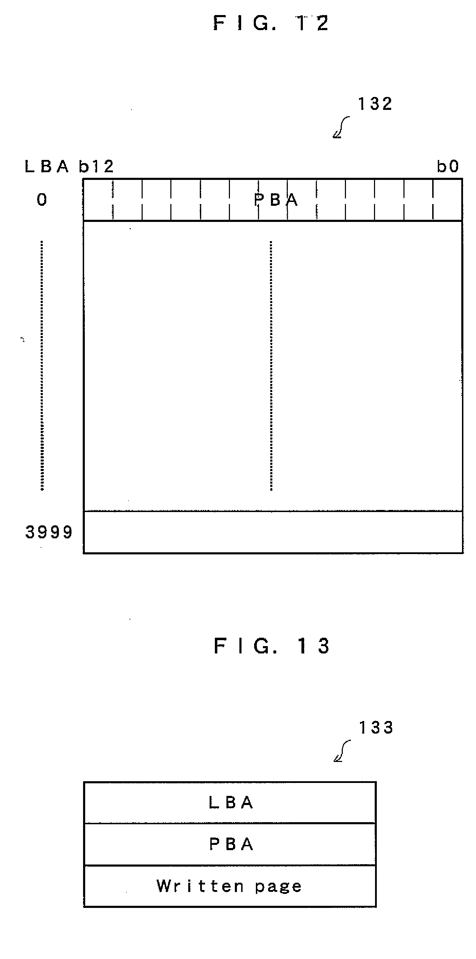

[Fig. 12] Fig. 12 is an explanation view showing a format of a logical-physical conversion table 132.

[Fig. 13] Fig. 13 is an explanation view showing an example of a write state management table.

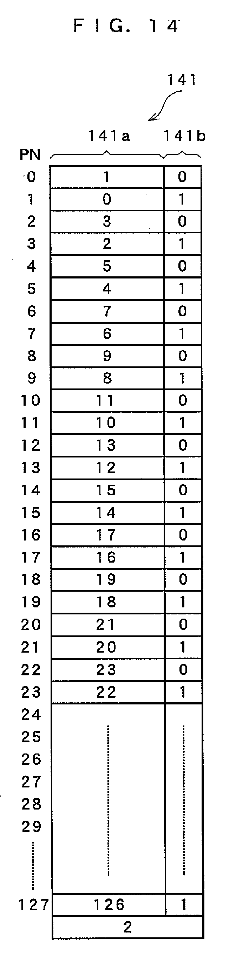

[Fig. 14] Fig. 14 is an address map showing a format of a page information table.

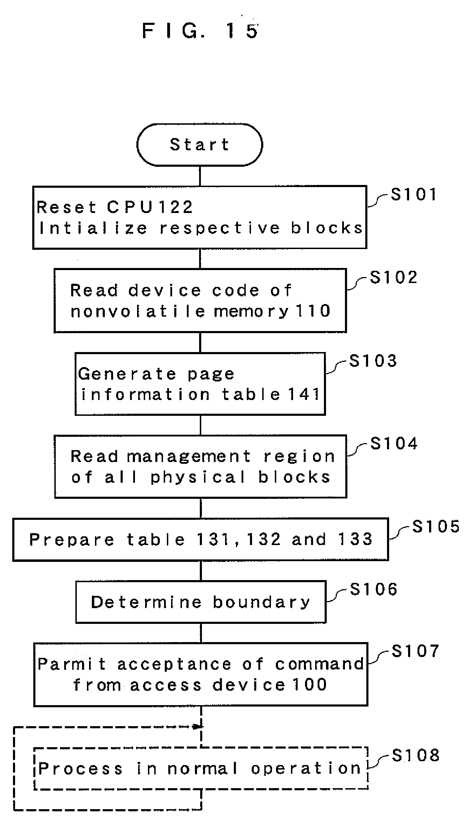

[Fig. 15] Fig. 15 is a flow chart showing a initialization process.

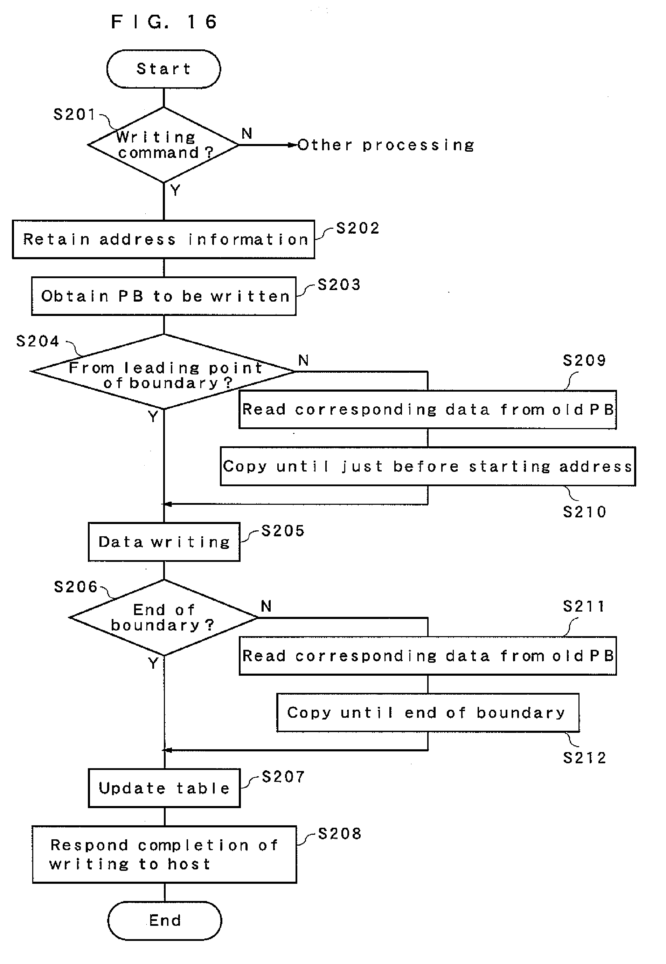

[Fig. 16] Fig. 16 is a flow chart showing a data writing process.

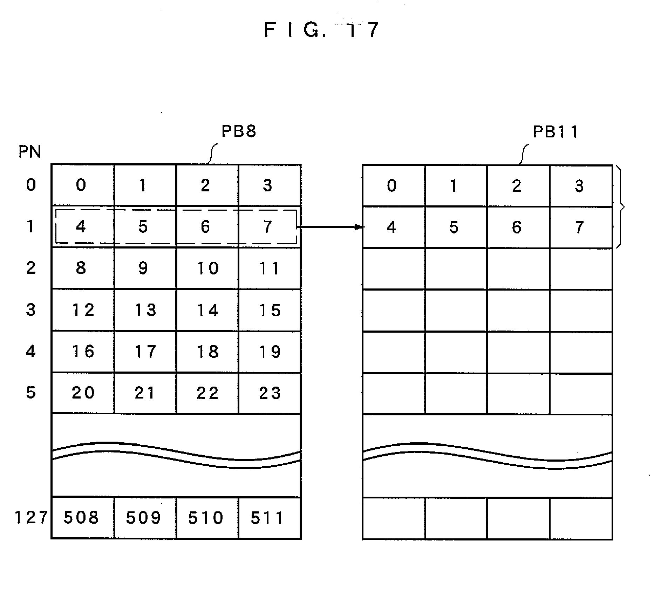

[Fig. 17] Fig. 17 is a view showing an example of writing for the case of writing data to a physical block.

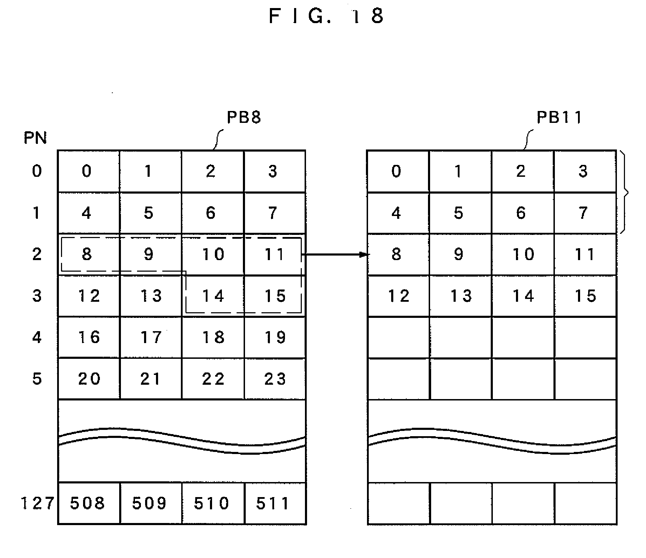

[Fig. 18] Fig. 18 is a view showing an example of a process in an additional writing of data.

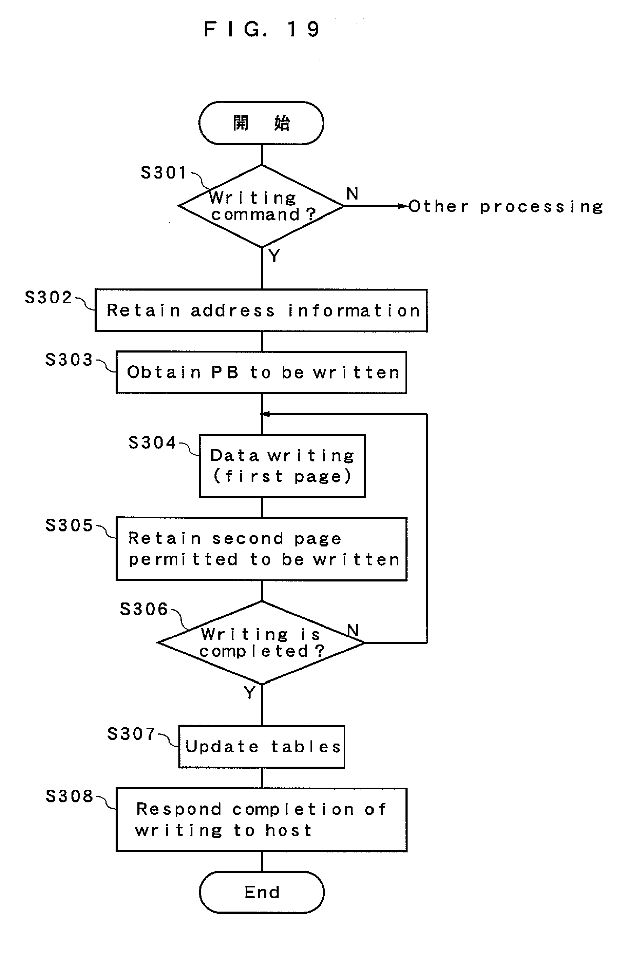

[Fig. 19] Fig. 19 is a flowchart showing a data writing process according to the second embodiment.

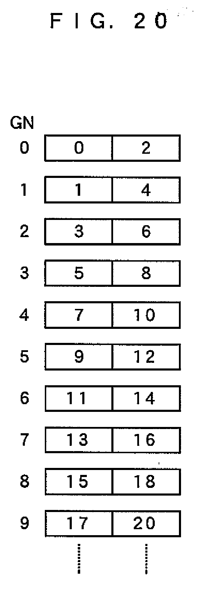

[Fig. 20] Fig. 20 is a view showing configuration of a nonvolatile memory in a nonvolatile storage system according to the second embodiment.

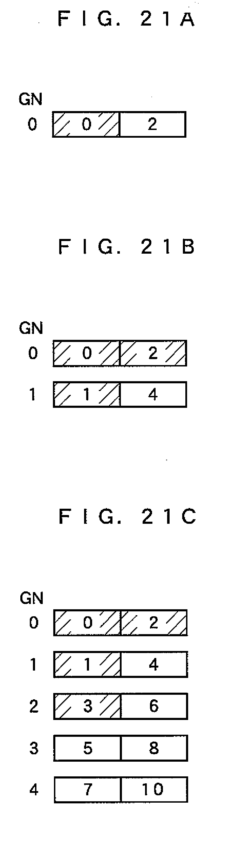

[Fig. 21A] Fig. 21A is a view showing data-writing state in the nonvolatile storage system according to the second embodiment.

[Fig. 21B] Fig. 21B is a view showing data-writing state in the nonvolatile storage system according to the second embodiment.

[Fig. 21C] Fig. 21C is a view showing data-writing state in the nonvolatile storage system according to the second embodiment.

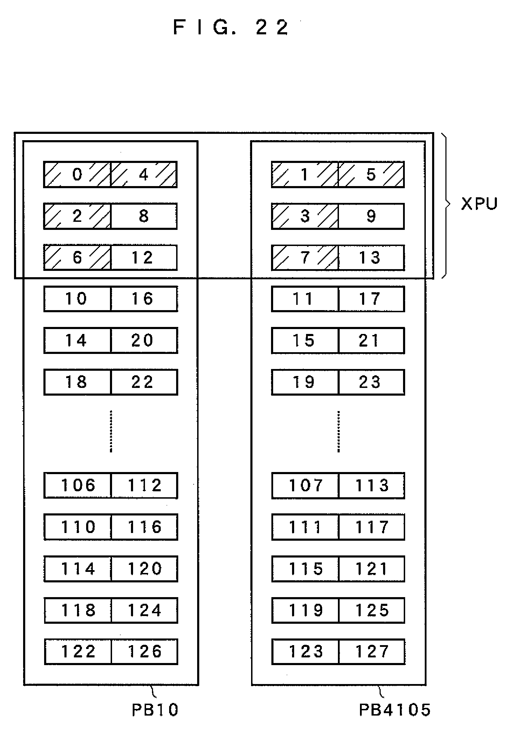

[Fig. 22] Fig. 22 is a view showing data-writing state in the nonvolatile storage system according to a modified example of the second embodiment.

Description of Reference Numerals

| | |
|---|---|
| 100A | Nonvolatile storage device |
| 101 | Access device |
| 110 | Nonvolatile memory |
| 120A | Memory controller |
| 122 | CPU |
| 125 | Buffer memory |
| 126 | Address management portion |
| 127 | Reading and writing control portion |
| 128 | Page information indication portion |
| 129 | Physical unit writing portion |
| 131 | Physical area management table |
| 132 | Logical-physical conversion table |
| 133 | Write state management table |
| 141 | Page information table |

BEST MODE FOR CARRYING OUT THE INVENTION

(First embodiment)

A nonvolatile storage system according to the first embodiment of the present invention will be described below. Fig. 7 is a block diagram of the nonvolatile storage system. The nonvolatile storage system is configured with a nonvolatile storage device 100A and an access device 101.

The nonvolatile storage device 100A includes a nonvolatile memory being composed of a flash memory and a memory controller 120A. The nonvolatile memory 110 is a multi-level NAND flash memory in which one memory cell retains data striding over two pages. For example, as shown in Fig. 8, the nonvolatile memory 110 consists of 4096 physical blocks of PB0 to PB4095. The physical block is a unit of erasing and each of the physical blocks consists of 128 pages. Each page is a unit of access from the memory controller 120A and has a storage capacity of 2112 bytes. Here, the nonvolatile memory is a memory having the same group configuration as Fig. 1.

The access device 101 orders reading and writing user data (simply referred to as data below), transmits logical addresses where the data is stored, and transmits and receives data to and from the nonvolatile storage device 110A. Upon receiving the order of reading and writing from the access device 101, the memory controller 120A writes received data to the nonvolatile memory 110 ,and reads data from nonvolatile memory 110 and outputs them to outside.

Next, details of the memory controller 120A will be described. The memory controller 120A provided with the nonvolatile storage device 100A includes a host IF 121, a CPU 122 for controlling the whole of the memory controller 120A. And, the controller includes a RAM 123 which is a work area of the CPU 122 and a ROM 124 storing programs executed by the CPU122. Further, the memory controller 120A includes a buffer memory 125 for temporarily storing data in the case of accessing to the nonvolatile memory 110, and an address management portion 126 for designating addresses in the nonvolatile memory 110.

A reading and writing control portion 127 writes data to the nonvolatile memory 110 based on addresses designated by the address management portion 126 and reads data in the nonvolatile memory 110.

Fig. 9 shows a format of a physical block in the nonvolatile memory 110. As shown in this figure, one physical block consists of 128 pages of page number (PN) 0 to 127 and each page consists of a data area of 4 sectors and a management region MR. Capacity of one sector is 512 bytes and that of one page configured with 4 sectors is 2048 bytes. The management region MR is 64 bytes a page. The number of pages required for storing data of one cluster is 8 pages. In addition, physical allocation reference numbers such as PSA0, PSA1, ... , PSA511 are given from the upper left in Fig. 9. PSA is an abbreviation consisting of initial character of Physical Sector Address.

Fig. 10 is an explanation view showing a format of a logical address LA. As shown in this figure, a sector number, a page number, and a logical block address LBA are shown from the lower bit, 12 bits corresponding to the logical block address LBA are objects for address conversion and, that is , an address of the logical-physical conversion table 132. Since a sector size defined by a file system of the access device 101 is 512 bytes and a cluster size is 16 k bytes, LSB of the cluster number corresponds to bit 5 (b5). The b2 to b8 in the logical address LA correspond to the page number.

The address management portion 126 includes a physical area management table 131, a logical-physical conversion table 132, and a write state management table 133. The address management portion 126, with referring to these tables, executes so-called address management such as selecting a physical block to which data transferred from the access device 101 are written and indicating a page to be written in the physical block, namely a current page number. In the physical area management table 131, a status of physical block that is a unit of erasing in the nonvolatile memory 101, that is, status flags showing whether valid data are stored or not are stored. The logical-physical conversion table 132 is a necessary table for converting a logical address transferred by the access device 101 into a physical address in the nonvolatile memory 110.

Fig. 11 shows a format of the physical area management table 131. As suggested by this figure, addresses of the physical area management table 131 correspond to physical block addresses PBA and the table stores status flags of respective blocks. As status flags, value 00 in binary code indicates a valid block in which valid data are stored, value 11 indicates an invalid block which is already erased or which is needless even though data is written in the block, and value 10 indicates a bad block which became unusable block resulting from, for example, solid error on memory cell.

Fig. 12 shows a format of the logical-physical conversion table 132. The table 132 is a table for retaining physical block addresses PBA corresponding to respective logical block addresses LBA.

Fig. 13 is a view showing the write state management table 133. The write state management table 133 has an area which stores, when data in a certain logical block is written not only in one physical block but also in other physical block (new physical block), address LBA of the logical block and address PBA of the other physical block, and which retains already written pages in the physical block PBA. It is preferable that a plurality of the write state management tables 133 are provided so that a plurality of logical blocks can correspond to new and old physical blocks, but the number of the state management table 133 may be at least one.

A page information direction portion 128 has a page information table 141 and stores page information concerning pages of data retained in memory cells. Fig. 14 is an address map showing a format of the page information table 141 included in the page information direction portion 128. The page information table 141 consists of 129 words and 128 words from the leading word correspond to page numbers (PN) 0 to 127. Respective words store page number relevant information 141a and page type information 141b. The page number relevant information 141a stores another page number in the same group. The page type information 141b stores flags for determining whether it is the first page or the second page in the same memory cell group. "0" shows the first page and "1" shows the second page here. In addition, as described above, the first page and the second page show the writing order in the same memory cell group of the multi-level memory cells.

The last word in the page information table 141 stores the number of pages included in one memory cell, 2 is stored here. In addition, the page information table 141 of Fig. 14 shows page configuration of the multi-level NAND flash memory shown in Fig. 8 as a table and its contents vary depending on the type of multi-level NAND flash memory.

Further, the page information table 141 is composed of a volatile RAM such as SRAM, nonvolatile RAM such as ferroelectric memory (FeRAM), or ROM. In the case of the volatile RAM, it is only necessary that the CPU 122 configures it in, for example, SRAM on the basis of a device code that is read from the nonvolatile memory 110 by the CPU 122 in initialization processing at power-on. As an example of a concrete configuration method, the page information table is preliminarily stored in, for example, the ROM 124 by device type, and may be selectively transferred from the ROM 124 to SRAM on the basis of the device code. In addition, since the multi-level NAND flash memory having comparatively simple page configuration as shown in Fig. 1 has a relationship (regularity) of even and odd, the page information direction portion 128 is not required to have a page information table and can calculate page number relevant information in bit operation based on the device code. In concrete, when the multi-level NAND flash memory as shown in Fig. 1 is used, the calculation can be executed based on expression (1). An operator means exclusive OR here.

$$\text{Page number relevant information} = \text{Page number } \hat{} \text{ 0x01} \quad (1)$$

When data is written to a physical block in a writing unit equal to or less than the physical unit, a physical unit write portion 129 controls data writing so that data is written in units of physical unit by copying data in other area configuring one physical unit with the data to unwritten area in the physical unit, based on a result of a boundary determined on the basis of the page information table 141.

An operation of the non-volatile storage device 100A will be described below.

[Initialization processing at power-on]

Fig. 15 is a flowchart showing a process after the power-on. When turning on the power, the CPU 122 is reset and initialization processing is executed based on a program stored in the ROM 124 (S101). In such initialization processing, at first, RAM 123 and buffer memory 125 are cleared all. A device code is read from a system area in the nonvolatile memory 110 via the read and write controller 127 and a type and a capacity of the nonvolatile memory 110 are specified based on the device code (S102).

Subsequently, the page information table 141 is configured in the page information direction portion 128 based on the device code read from the nonvolatile memory 110 (S103). Alternatively, the page information direction portion 128 may configure page configuration information by using a calculation function (corresponding to the expression 1) based on the device code.

Next, management regions in leading pages of all physical blocks in the nonvolatile memory 110 are read via the read and write control portion 127 (S104). After that, the physical management portion 131, logical-physical conversion table 132, and write state management table 133 are prepared in the address management portion 126 (S105).

And then, the CPU 122 determines a boundary based on the device code read at S102 (S106). For example, in the multi-level NAND flash memory shown in Fig. 1, areas of 4 kB of page PN0 and page PN1 are configured so as to be one memory cell group. As mentioned above, a plurality of pages configured in one memory cell group is defined as a page group. Accordingly, one page group is configured with pages PN0 and PN1. In addition, in a physical block, an area which consists of at least one page group unit formed in areas which are consecutive in the order of writing and where the page group is closed without striding over a plurality of areas is one physical unit. In a similar way, since areas continuing to one page group are closed in 4 kB of pages PN2 and 3, the areas configure one physical unit and its border is set to be a boundary. Furthermore, in the multi-level NAND flash memory shown in Fig. 2, since two page groups are closed in areas of 8 kB being continuous from pages PN0 to PN3, two page groups configure one physical unit. In a similar way, since two page groups are closed in 8 kB, these configure one physical unit and its border is set to be one boundary. As described above, a physical unit is configured with consecutive 2n (n is natural number) number of pages. This information is retained by the page information direction portion 128. After the boundary is determined in this manner, an acceptance of a command from the access device 100 is permitted (S107) and a step progresses to normal operation (S108).

[A process in normal operation]

Next, a process in normal operation after the initialization will be described by using a flow chart of Fig. 16. Since the present invention makes improvement so that writing is necessarily executed to unwritten physical block responding to a writing command from the access device 101 in order to avoid an aftermath, that is a problem in writing process, to other pages composing the same memory cell, only writing process will be described here too.

At first, the access device 101 transfers, for example, a writing command of 2kB of logical addresses LA0 to LA3. Upon receiving a write command, the host IF 121 informs the CPU 122 of receiving the command and the CPU 122 retains data of a leading logical address from which the access device 101 starts writing (step S201 and S202).

Next, the CPU 122 directs the address management portion 126 to obtain one physical block to be written (S203). The address management portion 126 refers to the write state management table 133, and searches a registration corresponding to the logical address. When there is no registration corresponding to the logical address, an invalid physical block is searched in ascending order from an address selected at random and a firstly searched invalid physical block is set to be a physical block to be written. In this case, a page to be written is PN0 that is a leading page. When there is a registration in the write state management table 133, the registered physical block (PBA) is set to be a physical block to be written. In this case, a page to be written is a page next to the written page registered in the write state management table 133.

Next, the CPU 122 confirms whether an address from which the access device 101 starts writing is a leading position of a boundary or not (S204), when writing starts from a leading position of a boundary, data can be written in an unwritten physical unit from a leading position of the physical unit. Data of the logical addresses LA0 to LA3 transferred from the access device 101 is successively written via the buffer memory 125 at step 205.

Next, the CPU 122 confirms at step S206 whether the writing is made to the end of the boundary or not. When the writing is made to the end of the boundary, necessary updates to the physical area management table 131, the logical-physical conversion table 132, and the write state management table 133 are executed at step S207, the CPU responds completion of writing to the access device 101 (S208), and the process finishes. Upon receiving a response of completion of writing from the nonvolatile storage device 100A, the access device 101 as a host recognizes that data writing based on the writing command has normally completed and data have been written correctly.

When writing does not start from the leading position of a boundary at step S204, an address of page corresponding to old physical block is obtained on the basis of the physical area management table 131 and corresponding data is read from the old physical block (S209). Data of addresses until just before an address from which the access device 101 starts writing is copied successively from a leading position of the unwritten physical unit (first-half involving process). And, process returns to step S205.

When the writing is not made to the end of the boundary at step S206, an address of a page corresponding to old physical block is obtained at step S211 on the basis of the physical area management table 131 and corresponding data is read from the old physical block (S211). Data until the end of the boundary is copied (second-half involving process) then. And, process returns to step S207. In this way, writing from the leading position of a boundary to the end of the boundary is necessarily executed in response to one writing command from the access device 101.

Next, a writing process until a boundary will be described by using a concrete writing example. A physical block PB8 in Fig. 17 is a physical block in which data is written to all pages, for example, as shown in the figure. Numerical numbers in the physical block PB8 only show numbers of sector number PSBO to PSB511. In addition, since it is assumed that the multi-level NAND flash memory in Fig. 1 is used, a physical unit consists of two pages of continuous even and odd number. And now, a case where new data is written in sectors 0 to 3 of the same logical block address as this will be described. In this case, a new physical block, for example, PB11 is selected as a physical block to be written. For this reason, the physical block PB11 is a new physical block and the physical block PB8 in which data of the same logical address as this is an old physical block. The old physical block is associated with a logical block by the logical-physical conversion table 132. The new physical block is managed by the write state management table 133. And, data of sector 0 to 3 is written in page PN0 of the physical block PB11. Then, it is required to write data also to page PN1 that composes a physical unit with the page PN0 of the physical block PB11. Consequently, data of sectors 4 to 7, shown by broken line in the figure, retained in page PN1 in the old physical block PB8 is copied (involving process) in page PN1 in PB11 as described above. Hereby, writing can be executed until a border of a boundary, that is, in units of physical unit.

A case where data are successively written in sectors 12 and 13 of the same logical block will be described by using Fig. 18. Since the sectors 12 and 13 are not in leading position of a boundary, writing is executed by copying data from sector 8 of the leading position of a boundary to sector 11 (just before sector 12 from which writing starts) to the physical block PB11 from the old physical block PB8. Next, writing is executed by additionally writing sectors 12 and 13 that are data to be written from the access device 101 to the physical block PB11. Then, writing is executed by copying physical sector addresses 14 and 15 in the old physical block PB8. The writing from the leading position of a boundary of a physical unit to the end of the boundary is completed in this way. In a similar way, writing is executed in a boundary unit even if the writing is within the boundary.

As described above, in the embodiment of the present invention, since data is necessarily written in units of physical unit, that is, until a border of a boundary, a specific error of the nonvolatile memory 110 in which respective memory cells retain data striding over two pages, namely an error of changing data in a first page through writing in a second page, does not occur striding over a plurality of commands of the access device 101 as a host. A process for one command from the access device 101 is necessarily completed in units of physical units, and this is also referred to as closed. Therefore, a reliability failure to the effect that data, which the access device 101 recognizes as normally written data, is really destroyed can be eliminated.

Not limited in the case where a physical block is composed as Fig. 1 and Fig. 2, the nonvolatile memory 110 can set a unit that is closed in a plurality of pages and in which an error of data writing does not spread to other pages to be a physical unit, and its border can be a boundary.

In addition, the nonvolatile memory 110 is a type of a memory in which respective memory cells retain data striding over two pages, however, a type of a memory retaining data striding over three pages can be applied to the present invention.

(Second embodiment)

Next, a second embodiment of the present invention will be described. Since configuration of blocks showing configuration of a nonvolatile system according to the second embodiment is the same as that of Fig. 1, description for the configuration of blocks is omitted.

A multi-level nonvolatile memory as shown in Fig. 3 also exists other than the multi-level nonvolatile memory in which a page group is completed by being closed in units of two pages or four pages as shown in Fig. 1 and Fig. 2. In this nonvolatile memory shown in Fig. 3, since the physical unit of a model in the first embodiment is not closed in a specific unit, application of the nonvolatile storage system according to the first embodiment cannot be realized. Even in such a case, in order to prevent data destruction by data writing, a concept of a physical unit is extended in the second embodiment.

Next, writing process according to the second embodiment will be described by using a flowchart of writing in Fig. 19. First, the access device 101 issues a writing command to the nonvolatile storage device 100A. Upon receiving the writing command, the host IF 121 notifies the reception to the CPU 122 and the CPU 122 retains information of a leading logical address from which the access device 101 starts writing (steps S301 and S302).

Next, the CPU 122 directs the address management portion 126 to obtain one physical block to be written (S303). The address management portion 126 refers to the write state management table 133, and searches a registration corresponding to the logical address. When there is no registration corresponding to the logical address, the address management portion 126 searches an invalid physical block in ascending order from addresses selected at random and sets a firstly searched invalid physical block to be a physical block to be written. In this case, a page to be written is PN0 that is a leading page. When there is a registration in the write state management table 133, the address management portion 126 sets the registered physical block (PBA) to be a physical block to be written. In this case, a page to be written is a page that is subsequent to a written page registered in the write state management table 133 and is the first page in first page group. The page type information 141b in the page information direction portion 128 is used in order to determine whether it is a first page or a second page.

Next, the CPU 122 writes data of one page successively from an address from which the access device 101 starts writing (S304). After that, in S305, the CPU 122 obtains a position of the second page in the same group as the written page from the page number relevant information 141a in the page information direction portion 128 and retains the position as a sign showing a condition that writing is permitted. The address of the second page retained here is retained in effect during a period of one writing command from the access device 101 until writing is executed, but is deleted when one writing command from the access device 101 is completed. As a result, pages written in S304 are only first pages in respective page groups or only second pages of a page group retained in next step 305. That is to say, writing is not executed to second pages of page groups that are not retained in step S305.

Next, in step S306, it is determined whether writing of the access device 101 has finished or not, when the writing has not finished, the process continues returning to S304, and when the writing has finished, necessary updates to the physical area management table 131, the logical-physical conversion table 132, and the write state management table 133 are executed at step S307, the CPU responds completion of writing to the access device 101 (S308), and the process finishes. Upon receiving a response of completion of writing from the nonvolatile storage device 100A, the access device 101 as a host recognizes that data writing based on the writing command has normally completed and data has been written correctly.

As described above, pages to be written in step S304 are only limited to first pages in respective page groups or second pages of page groups whose first pages are written in processing of one writing command from the access device 101. Therefore, writing is not executed to second pages configuring the same page group as that of first pages written in a former writing command.

Fig. 20 is a figure showing the multi-level NAND flash memory 110 shown in Fig. 3 every page groups. Group numbers GN of page groups are represented on the left side, page numbers PN of the first page are represented in left side inside a frame in the line of the number, and corresponding page numbers of the second page are represented in right side in the frame. In the first line, GN is shown as "0", and "0" and "2" are shown in the frame, this indicates that page PN0 and page PN2 configure one page group, and that its group number is GN0. The way of writing to a nonvolatile memory with the group structure shown in the figure according to a write command will be described below.

(1) When data of four sectors (one page) is written in one writing command from the access device 101 for example, the data is written only to page PN0 that is a leading page shown by hatching as shown in Fig. 21A. In PN2 that is a page configuring the same page group, writing to page PN2 is executed neither in this writing command from the access device 101 nor in a following writing command from the access device 101. In this case, next data writing is executed starting from page PN1 which is the first page PN1 right after the page PN0, that is, GN1. In this case, an extended physical unit in the first writing is a unit consisting of one page group GN0.

(2) In addition, when data of 12 sectors (three pages) is written in one writing command from the access device 101, data is written in areas shown by hatching in the order of page number from page PN0 to page PN2 by writing in accordance with the similar writing rule as shown in Fig. 21B. In this case, data is written in two page groups, that is, GN0 and GN1. Next data writing will start from GN2 including page PN3 corresponding to first page right after page PN2, and following data writing is not executed to PN4 of GN1. In this case, an extended physical unit is a unit consisting of two page groups of GN0 and GN1.

(3) When data of 16 sectors (four pages) is written by one writing command from the access device 101, data is written in PN0 to PN3 of GN0, GN1, and GN2 as shown in Fig. 21C. In next data writing, the data writing is executed in the order of page PN5 , PN7, PN8 , ... of GN3 that is a page corresponding to first page right after page PN3. In this case, since writing is not executed to page PN1 and PN3 that are first pages of the page groups GN1 and GN2, page PN4 and PN6 are not used. In this case, an extended physical unit is configured with three page groups of GN0, GN1, and GN2.

As described above, an extended physical unit is adaptively changed in accordance with the number of pages to be written in one time by the access device 101, only one writing process is executed to the extended physical unit configured in the command, and following writing process is not executed to the remaining page. In embodiments of the present invention, an area necessarily including all page groups in an area to which data writing is executed is set to be an extended physical unit. For this reason, even in a case where an area closed in units of specific page groups can not be configured, a specific error of the multi-level NAND nonvolatile memory 110, that is, an error that changes data stored in a first page under the influence of a writing error of a second page does not occur striding over a plurality of commands from the access device 101. Therefore, reliability failure to the effect that data which the access device 101 recognizes as normally written is really destroyed can be eliminated.

Next, a modified example of the present invention will be described. A nonvolatile memory is configured so as to execute high-rate processing by using a plurality of, for example, two memory chips in parallel and by simultaneously reading and writing data from and to the two memory chips at the same time. Fig. 22 shows a configuration of such nonvolatile memory, and PB10 is one of physical blocks in the first memory cell, and PB4105 is one of physical blocks in the second memory cell. Data is read and written in parallel from and to pages to which these physical blocks correspond. Also in this case, one page group is configured with PN0 and PN4 in PB10. Following page groups are configured in similar way. In this case, when writing is executed in PN0 to PN7 for example, data is written in the unit shown in Fig. 22 by hatching. In this case, an extended physical unit XPU is a unit of pages PN0 to PN13. Without writing data to PN8 and PN12 in physical block PB10, and to PN9 and PN13 in physical block PB4105, next writing is executed in the units of new extended physical units. Also in this case, spread of an error to another page occurs only in a region closed in one writing command from the access device 101. As a result, reliability failure to the effect that data, which the access device 101 recognizes as normally written data, is really destroyed can be eliminated.

INDUSTRIAL APPLICABILITY

The memory controller, nonvolatile storage device, and nonvolatile storage system can improve reliability in a device using nonvolatile memory in which respective memory cells retain data striding over a plurality of pages such as a multi-level NAND flash memory. The present invention can be applied for a portable AV apparatus such as a recording and reproducing apparatus for a still image and motion picture, and for a storage medium for a portable communication device such as a cellular phone.

**Claims**

1. A memory controller which executes data writing and data reading to a memory on a basis of a writing and reading command provided from outside, wherein
   said memory includes a plurality of pages,
   said page is a unit of writing in said memory,
   a physical unit is configured with at least one page group consisting of first and second pages in which, when data writing is executed to either page, writing status of data to other page temporarily changes, and comprises:

   a physical unit writing portion for executing writing to said unwritten physical unit in response to a writing command from said outside.

2. The memory controller according to claim 1, wherein
   said memory stores data by using multi-level memory cells.

3. The memory controller according to claim 2, wherein
   said memory is a nonvolatile memory.

4. The memory controller according to claim 3, wherein
   said physical unit is configured with continuous 2n (n = 1, 2, ...) pages.

5. The memory controller according to claim 3, wherein,

when first data is written in units equal to or less than said physical unit in writing of one command from said outside, by copying second data from an already written physical unit, said physical unit write portion writes data in units of said physical unit by using said first data and said second data.

6. The memory controller according to claim 3, further comprising:

a page information direction portion for retaining information showing which pages in a plurality of said pages are included in said physical unit.

7. The memory controller according to claim 3, wherein
said physical unit has an area where writing of data to be written from said outside is not executed.

8. The memory controller according to claim 7, wherein
said area where writing is not executed is a portion of an area in said page group.

9. The memory controller according to claim 3, wherein
said physical unit is configured with a plurality of discontinuous pages.

10. The memory controller according to claim 3, wherein,
when data is written in the memory in accordance with a writing command from outside, said physical unit writing portion varies a size of said physical unit depending on an amount of data to be written.

11. A nonvolatile storage device comprising:

a nonvolatile memory configured with a plurality of pages; and
a memory controller which executes data writing and data reading to said nonvolatile memory on a basis of a writing command provided from outside, wherein

said page is a unit of writing in said memory,
a physical unit is configured with at least one page group consisting of first and second pages in which, when data writing is executed to either page, writing status of data to other page temporarily changes, and
said memory controller includes a physical unit writing portion for executing writing to said unwritten physical unit in response to a writing command from said outside.

12. The nonvolatile storage device according to claim 11, wherein
said nonvolatile memory stores data by using multi-level memory cells.

13. The nonvolatile storage device according to claim 12, wherein
said physical unit is configured with continuous 2n (n = 1, 2, ...) pages.

14. The nonvolatile storage device according to claim 12, wherein,
when first data is written in units equal to or less than said physical unit in writing of one command from said outside, by copying second data from already written physical unit, said physical unit write portion writes data in units of said physical unit by using said first data and said second data.

15. The nonvolatile storage device according to claim 12, wherein
said memory controller further includes a page information direction portion for retaining information showing which pages in a plurality of said pages are included in said physical unit.

16. The nonvolatile storage device according to claim 12, wherein
said physical unit has an area where writing of data to be written from said outside is not executed.

17. The nonvolatile storage device according to claim 16, wherein
said area where writing is not executed is a portion of an area in said page group.

18. The nonvolatile storage device according to claim 12, wherein
said physical unit is configured with a plurality of discontinuous pages.

**19.** The nonvolatile storage device according to claim 12, wherein,
when data is written in the memory in accordance with a writing command from outside, said physical unit writing portion varies a size of said physical unit depending on an amount of data to be written.

**20.** A nonvolatile storage system comprising an access device and a nonvolatile storage device, wherein said access device transmits at least a writing command and data to said nonvolatile storage device, said nonvolatile storage device includes:

a nonvolatile memory configured with a plurality of pages, and
a memory controller which executes data writing and data reading to said nonvolatile memory on a basis of a writing and reading command provided from outside,

said page is a unit of writing in said memory,
a physical unit is configured with at least one page group consisting of first and second pages in which, when data writing is executed to either page, writing status of data to other page temporarily changes, and
said memory controller includes a physical unit writing portion for executing writing to said unwritten physical unit in response to a writing command from said outside.

**21.** The nonvolatile storage system according to claim 20, wherein
said nonvolatile memory stores data by using multi-level memory cells.

**22.** The nonvolatile storage system according to claim 21, wherein
said physical unit is configured with continuous 2n (n = 1, 2, ...) pages.

**23.** The nonvolatile storage system according to claim 21, wherein,
when first data is written in units equal to or less than said physical unit in writing of one command from said outside, by copying second data from an already written physical unit, said physical unit write portion writes data in units of said physical unit by using said first data and said second data.

**24.** The nonvolatile storage system according to claim 21, wherein
said memory controller further includes a page information direction portion for retaining information showing which pages in a plurality of said pages are included in said physical unit.

**25.** The nonvolatile storage system according to claim 21, wherein
said physical unit has an area where writing of data to be written from said outside is not executed.

**26.** The nonvolatile storage system according to claim 25, wherein
said area where writing is not executed is a portion of an area in said page group.

**27.** The nonvolatile storage system according to claim 21, wherein
said physical unit is configured with a plurality of discontinuous pages.

**28.** The nonvolatile storage system according to claim 21, wherein,
when data is written in the memory in accordance with a writing command from outside, said physical unit writing portion varies a size of said physical unit depending on an amount of data to be written.

**29.** A data writing method which executes data writing and data reading to a memory on a basis of a writing command provided from outside, wherein
said memory includes a plurality of pages,
said page is a unit of writing in said memory,
a physical unit is configured with at least one page group consisting of first and second pages in which, when data writing is executed to either page, writing status of data to other page temporarily changes, and comprises:

a physical unit writing step for executing writing to said unwritten physical unit in response to a writing command from said outside.

**30.** The data writing method according to claim 29, wherein
said memory stores data by using multi-level memory cells.

31. The data writing method according to claim 30, wherein
said memory is a nonvolatile memory.

32. The data writing method according to claim 31, wherein
said physical unit is configured with continuous 2n (n = 1, 2, ...) pages.

33. The data writing method according to claim 31, wherein,
when first data is written in units equal to or less than said physical unit in writing of one command from said outside,
by copying second data from an already written physical unit, said physical unit write step writes data in units of
said physical unit by using said first data and said second data.

34. The data writing method according to claim 31, comprising:

retaining information showing which pages in a plurality of said pages are included in said physical unit.

35. The data writing method according to claim 31, wherein
said physical unit has an area where writing of data to be written from said outside is not executed.

36. The data writing method according to claim 35, wherein
said area where writing is not executed is a portion of an area in said page group.

37. The data writing method according to claim 31, wherein
said physical unit is configured with a plurality of discontinuous pages.

38. The data writing method according to claim 31, wherein,
when data is written in the memory in accordance with a writing command from outside, said physical unit writing
portion varies a size of said physical unit depending on an amount of data to be written.

F I G. 1

# F I G. 2

# F I G. 3

PB

| PN | GN |
|----|----|
| 0 | 0 |
| 1 | 1 |
| 2 | 0 |
| 3 | 2 |
| 4 | 1 |
| 5 | 3 |
| 6 | 2 |
| 7 | 4 |
| 8 | 3 |
| 9 | 5 |
| 10 | 4 |
| 11 | 6 |
| 12 | 5 |
| 13 | 7 |
| 14 | 6 |
| 15 | 8 |
| 16 | 7 |
| 17 | 9 |
| 18 | 8 |
| 19 | 10 |
| 20 | 9 |
| 21 | 11 |
| 22 | 10 |
| 23 | 12 |
| 24 | 11 |
| 25 | 13 |
| 26 | 12 |
| 27 | 14 |
| 28 | 13 |
| 29 | 15 |
| 127 | 64 |

F I G. 4

F I G. 5

F I G. 6

# FIG. 7

EP 1 898 312 A1

# FIG. 8

110

| PN | PB0 | PB1 | PB2 | PB4095 |
|---|---|---|---|---|
| 0 | 0 | | | |
| 1 | 0 | | | |
| 2 | 1 | | | |
| 3 | 1 | | | |
| 4 | 2 | | | |
| 5 | 2 | | | |
| 6 | 3 | | | |
| 7 | 3 | | | |
| 8 | 4 | | | |
| 9 | 4 | | | |
| 10 | 5 | | | |
| 11 | 5 | | | |
| 12 | 6 | | | |
| 13 | 6 | | | |
| 14 | 7 | | | |
| 15 | 7 | | | |
| 16 | 8 | | | |
| 17 | 8 | | | |
| 18 | 9 | | | |
| 19 | 9 | | | |
| 127 | 63 | 63 | 63 | 63 |

F I G. 9

PN

| | | | | | |
|---|---|---|---|---|---|
| 0 | PSA 0 | PSA 1 | PSA 2 | PSA 3 | M R |
| 1 | PSA 4 | PSA 5 | PSA 6 | PSA 7 | M R |
| | PSA 8 | PSA 9 | PSA 10 | PSA 11 | M R |
| | | | | | |
| 126 | PAS 504 | PAS 505 | PAS 506 | PAS 507 | M R |
| 127 | PAS 508 | PAS 509 | PAS 510 | PAS 511 | M R |

Data region          Management region
(2048 bytes／page)   (64 bytes／page)

# FIG. 10

EP 1 898 312 A1

Cluster number

b20                                                                 b 5                    b 0

Logical
address
L A

LBA

Page number
(128 pages in all)

Sector
number

Address conversion

PBA
(4096 blocks in all)

# F I G. 1 1

131

| PBA | b1 | b0 | |
|-----|----|----|----|
| 0 | | | 00 : Valid block<br>11 : Invalid block<br>10 : Bad block |
| 4095 | | | |

# FIG. 12

132

| LBA b12 | PBA | b0 |
|---|---|---|
| 0 | | |
| 3999 | | |

# FIG. 13

133

| LBA |
|---|
| PBA |
| Written page |

## F I G. 1 4

141

| PN | 141a | 141b |
|----|------|------|
| 0 | 1 | 0 |
| 1 | 0 | 1 |
| 2 | 3 | 0 |
| 3 | 2 | 1 |
| 4 | 5 | 0 |
| 5 | 4 | 1 |
| 6 | 7 | 0 |
| 7 | 6 | 1 |
| 8 | 9 | 0 |
| 9 | 8 | 1 |
| 10 | 11 | 0 |
| 11 | 10 | 1 |
| 12 | 13 | 0 |
| 13 | 12 | 1 |
| 14 | 15 | 0 |
| 15 | 14 | 1 |
| 16 | 17 | 0 |
| 17 | 16 | 1 |
| 18 | 19 | 0 |
| 19 | 18 | 1 |
| 20 | 21 | 0 |
| 21 | 20 | 1 |
| 22 | 23 | 0 |
| 23 | 22 | 1 |
| 24 | | |
| 25 | | |
| 26 | | |
| 27 | | |
| 28 | | |
| 29 | | |
| 127 | 126 | 1 |
| | 2 | |

# F I G. 1 5

Start

Reset CPU122
Intialize respective blocks  ——S101

Read device code of
nonvolatile memory110  ——S102

Generate page
information table141  ——S103

Read management region
of all physical blocks  ——S104

Prepare table 131, 132 and 133  ——S105

Determine boundary  ——S106

Parmit acceptance of command
from access device100  ——S107

Process in normal operation  ——S108

FIG. 16

Start

S201 — Writing command ? — N → Other processing

Y

S202 — Retain address information

S203 — Obtain PB to be written

S204 — From leading point of boundary ? — N

S209 — Read corresponding data from old PB

S210 — Copy until just before starting address

Y

S205 — Data writing

S206 — End of boundary ? — N

S211 — Read corresponding data from old PB

S212 — Copy until end of boundary

Y

S207 — Update table

S208 — Respond completion of writing to host

End

27

# F I G. 17

PB8                                          PB11

PN

| 0 | 0 | 1 | 2 | 3 |
|---|---|---|---|---|
| 1 | 4 | 5 | 6 | 7 |
| 2 | 8 | 9 | 10 | 11 |
| 3 | 12 | 13 | 14 | 15 |
| 4 | 16 | 17 | 18 | 19 |
| 5 | 20 | 21 | 22 | 23 |
| 127 | 508 | 509 | 510 | 511 |

| 0 | 1 | 2 | 3 |
|---|---|---|---|
| 4 | 5 | 6 | 7 |

EP 1 898 312 A1

F I G.  1 8

PB8                                    PB11

PN

| 0 | 0 | 1 | 2 | 3 |
| 1 | 4 | 5 | 6 | 7 |
| 2 | 8 | 9 | 10 | 11 |
| 3 | 12 | 13 | 14 | 15 |
| 4 | 16 | 17 | 18 | 19 |
| 5 | 20 | 21 | 22 | 23 |
| 127 | 508 | 509 | 510 | 511 |

| 0 | 1 | 2 | 3 |
| 4 | 5 | 6 | 7 |
| 8 | 9 | 10 | 11 |
| 12 | 13 | 14 | 15 |

29

# FIG. 19

```
        ┌──────────┐
        │   開  始  │
        └──────────┘
             │
   S301      ▽
        ╱ Writing ╲    N
       ╱ command ? ╲──────→ Other processing
        ╲         ╱
         ╲       ╱
             │ Y
   S302 ┌────────────────────────────┐
        │ Retain address information │
        └────────────────────────────┘
             │
   S303 ┌────────────────────────────┐
        │  Obtain PB to be written   │
        └────────────────────────────┘
             │ ◄───────────────┐
   S304 ┌──────────────────┐   │
        │   Data writing   │   │
        │  (first page)    │   │
        └──────────────────┘   │
             │                  │
   S305 ┌────────────────────────────┐
        │   Retain second page       │
        │  permitted to be written   │
        └────────────────────────────┘
             │                  │
   S306      ▽                  │
        ╱ Writing is ╲   N      │
       ╱ completed ? ╲─────────┘
        ╲           ╱
         ╲         ╱
             │ Y
   S307 ┌────────────────┐
        │  Update tables │
        └────────────────┘
             │
   S308 ┌────────────────────────────┐
        │  Respond completion of     │
        │    writing to host         │
        └────────────────────────────┘
             │
        ┌──────────┐
        │   End    │
        └──────────┘
```

F I G. 2 0

GN

| | | |
|---|---|---|
| 0 | 0 | 2 |
| 1 | 1 | 4 |
| 2 | 3 | 6 |
| 3 | 5 | 8 |
| 4 | 7 | 10 |
| 5 | 9 | 12 |
| 6 | 11 | 14 |
| 7 | 13 | 16 |
| 8 | 15 | 18 |
| 9 | 17 | 20 |

F I G. 2 1 A

GN

| | |
|---|---|
| 0 | 2 |

F I G. 2 1 B

GN

| | |
|---|---|
| 0 | 2 |
| 1 | 4 |

F I G. 2 1 C

GN

| | |
|---|---|
| 0 | 2 |
| 1 | 4 |
| 3 | 6 |
| 5 | 8 |
| 7 | 10 |

FIG. 22

PB10

PB4105

XPU

## INTERNATIONAL SEARCH REPORT

| | International application No. |
|---|---|
| | PCT/JP2006/310323 |

A.   CLASSIFICATION OF SUBJECT MATTER
*G06F12/16*(2006.01)i, *G06F12/00*(2006.01)i, *G06F12/02*(2006.01)i

According to International Patent Classification (IPC) or to both national classification and IPC

B.   FIELDS SEARCHED

Minimum documentation searched (classification system followed by classification symbols)
G06F12/16, G06F12/00, G06F12/02

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| E,X | JP 2006-195565 A  (Toshiba Corp.),<br>27 July, 2006 (27.07.06),<br>Page 10, line 48 to page 13, line 44<br>(Family: none) | 1-4,7-9,<br>11-13,16-18,<br>20-22,25-27,<br>29-32,35-37 |
| A | JP 2001-350665 A  (Hitachi, Ltd.),<br>21 December, 2001 (21.12.01),<br>Full text; all drawings<br>& US 2001/0048121 A1 | 1-38 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 August, 2006 (25.08.06) | 05 September, 2006 (05.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004062328 A

- JP 2001093288 A